Europäisches Patentamt

European Patent Office

Office européen des brevets

(11) Veröffentlichungsnummer: **0 092 058**
**B1**

(12) **EUROPÄISCHE PATENTSCHRIFT**

(45) Veröffentlichungstag der Patentschrift: **25.05.88**

(21) Anmeldenummer: **83102737.0**

(22) Anmeldetag: **19.03.83**

(51) Int. Cl.⁴: **B 23 K 37/02,** B 23 K 7/10

(54) **Schweiss- und/oder Schneidbrenner.**

(30) Priorität: **21.04.82 DE 3214717**

(43) Veröffentlichungstag der Anmeldung:
**26.10.83 Patentblatt 83/43**

(45) Bekanntmachung des Hinweises auf die
Patenterteilung:
**25.05.88 Patentblatt 88/21**

(84) Benannte Vertragsstaaten:
**FR GB IT SE**

(56) Entgegenhaltungen:
**EP-A-0 040 925**
**DE-C-1 045 741**
**DE-U-1 991 843**

(73) Patentinhaber: **MESSER GRIESHEIM GMBH**
**Hanauer Landstrasse 330**
**D-6000 Frankfurt/Main 1 (DE)**

(72) Erfinder: **Klein, Werner**
**Mühlheimer Strasse 19**
**D-6000 Frankfurt/Main (DE)**
Erfinder: **Leo, Heinz**
**Bottigstrasse 14**
**D-6382 Friedrichsdorf (DE)**

Courier Press, Leamington Spa, England.

**Beschreibung**

Die Erfindung betrifft einen Schweiß- und/oder Schneidbrenner entsprechend dem Gattungsbegriff des Patentanspruchs 1.

Ein solcher Schweiß- oder Schneidbrenner ist aus der EP—A—0 040 925 bekannt.

Solche Brenner müssen bei Verwendung bei einer Brennschneidmaschine in vertikaler Richtung verschiebbar an der Brennschneidmaschine befestigt sein, damit sie mit jeweils optimalem Abstand zu den unterschiedlich hohen (starken) Werkstücken positioniert werden können. Die vertikale Verschiebung des Brenners erfolgt dabei neuerdings nicht mehr von Hand, sondern mittels Motorkraft.

Um zu verhindern, daß der Brenner mit seiner Aufhängungskonstruktion bei seiner Abwärtsbewegung an dem zu bearbeitenden Werkstück aufstößt, werden Sicherungsvorrichtungen, wie z.B. kapazitive Abtasteinrichtungen zum Feststellen der Entfernung des Werkstückes von der Brennerspitze vorgesehen. Bei Versagen solcher Sicherheitsvorrichtungen stößt der Brenner nach Durchlaufen eines begrenzten Weges an einer Schwerkraftkoppelung ungebremst auf das Werkstück auf, mit allen den damit verbundenen nachteiligen Folgen für Brenner und Brenneraufhängung.

Der Erfindung liegt die Aufgabe zugrunde, Brenner der eingangs genannten Art so gegen die mit dem unbeabsichtigten Aufstoßen auf das zu bearbeitende Werkstück verbundenen nachteiligen Folgen zu sichern, daß die entsprechende Sicherheitsvorrichtung unbegrenzt weitgehend störunanfällig ist und dabei trotzdem den betrieblichen Anforderungen voll entspricht.

Diese Aufgabe wird erfindungsgemäß durch die kennzeichnenden Merkmale des Hauptanspruchs gelöst.

Weiterbildungen der Erfindung sind in dem Unteranspruch angegeben.

Der mit der Erfindung erzielte Vorteil liegt insbesondere in der nur geringe Mehrkosten verursachenden Sicherungskonstruktion.

Ein Ausbildungsbeispiel der Erfindung ist in der Zeichnung dargestellt und wird im folgenden häher beschrieben.

Es zeigen:

Fig. 1 eine Seitenansicht der erfindungsgemäßen Konstruktion, in einer ersten Arbeitsstellung,

Fig. 2 eine Draufsicht auf die Konstruktion nach Fig. 1, teilweise als Schnittdarstellung,

Fig. 3 eine Seitenansicht der erfindungsgemäßen Konstruktion in einer zweiten Arbeitsstellung und

Fig. 4 eine Draufsicht auf die Konstruktion nach Fig. 3, teilweise als Schnittdarstellung.

An einer nicht dargestellten Brennschneidmaschine ist ein Brenner 10 zum Zerschneiden eines Werkstückes 8 befestigt. Eine Brennerhalterung 12 dient zur Führung des Brenners 10 und weist eine Zahnstange 14 auf, die in vertikaler Richtung verschiebbar an einem Ritzel 16 entlangkämmt.

Dieses Ritzel 16 wird von einer Welle 18 in Drehbewegung versetzt, die ihrerseits von einem Motor 20 angetrieben wird. Die zwischen dem Ritzel 16 und der Welle 18 zur Übertragung der Drehbewegung erforderliche kraftschlüssige Verbindung wird durch eine Verschraubung von Ritzel 16 und Welle 18 bewerkstelligt. Zu diesem Zweck weist das Ritzel 16 in einem Längs — Teilbereich "a" ein Innengewinde 24 auf, das mit einem entsprechenden Außengewinde 26 der Welle 18, mit dem diese in einem Längs — Teilbereich "b" versehen ist, in Eingriff steht.

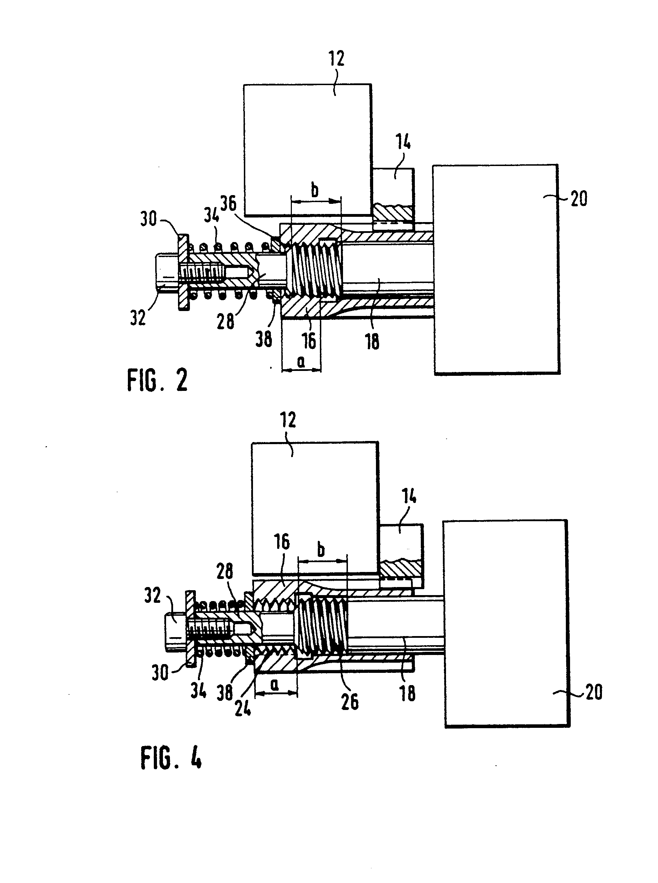

Die Welle 18 besitzt an ihrem dem Motor 20 entgegengesetzten stirnseitigen Ende einen Vorsprung 28, an dem stirnseitig eine Konsolplatte 30 mittels einer Schraube 32 mittig befestigt ist. Der Vorsprung 28 weist einen kleineren Querschnitt auf als die Welle 18, so daß an der Nahtstelle von Vorsprung 28 und Welle 18 an letzterer eine Schulter 36 ausgebildet ist. Gegen diese Schulter 36 wird mittels einer Feder 34 das Ritzel 16 mit einer nach innen zur Welle 18 hin zeigenden Scheibe 38 gedrückt (vgl. Fig. 2).

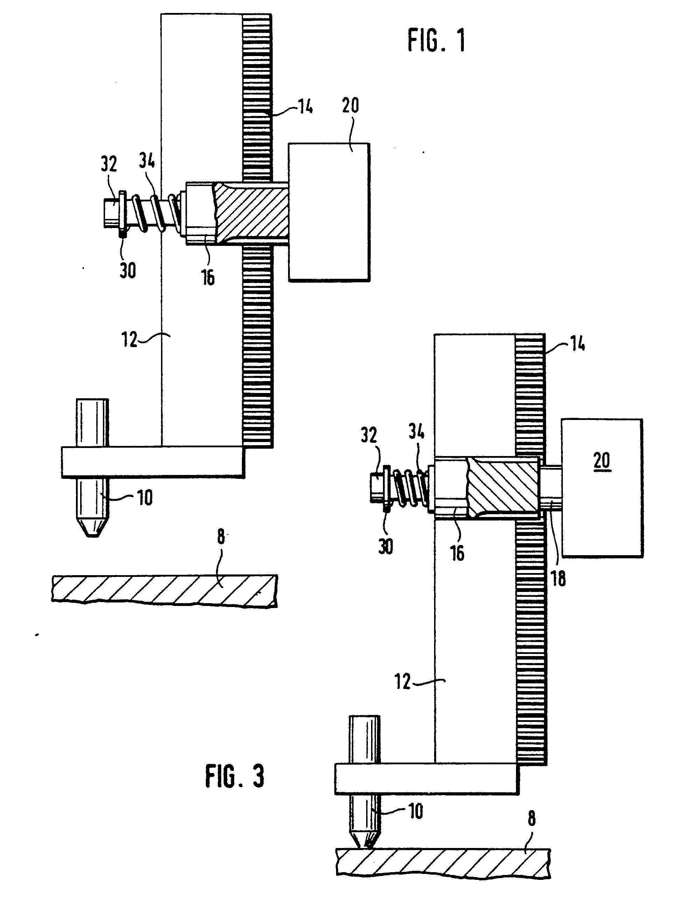

Das Eigengewicht von Brenner 10 und Brennerhalterung 12 sorgt dafür, daß das Ritzel 16 voll auf der Welle 18 aufgeschraubt bleibt. Dies gilt sowohl für die Abwärtsbewegung wie auch für die das Werkstück 8 nicht berührende Aufwärtsbewegung des Brenners 10 entlang der Zahnstange 14 (Fig. 1 und 2).

Sobald der Brenner 10 allerdings infolge irgendwelcher Umstände auf das Werkstück 8 aufstößt, bewirkt der von dem Werkstück 8 auf den Brenner 10 einwirkende Druck sowie die nach wie vor sich drehende Welle 18, daß sich das Ritzel 16 von der Welle 18 losdreht, das heißt, daß sich die Verschraubung "a" von der Verschraubung "b" löst. Damit wird trotz des nicht abgestellten Antriebsmotors 20 keine nach unten auf das Werkstück 8 mehr gerichtete Kraft durch den Brenner 10 mit ihrer für Brenner und Brennerhalterung 12 schädlichen Folgen ausgeübt.

Bei diesem Lösen der Verschraubung zwischen Ritzel 16 und Welle 18 verändert das Ritzel 16 seine horizontale Lage auf der Welle 18 um das Maß des Bereiches "a" bzw. "b" in Richtung der Konsolplatte 30 (Fig. 3 und 4). Dabei wird die Feder 34 verstärkt zusammengedrückt.

Nach erfolgtem Umschalten des Antriebsmotors 20 mit der Folge, daß die Welle 18 in nunmehr umgedrehte Umdrehung versetzt wird, bewirkt die durch die Feder 34 auf das Ritzel 16 in dessen Längsrichtung einwirkende Druckkraft, daß das Ritzel 16 mit seinem Gewinde 24 in Schraubkontakt mit dem Gewinde 26 der Wellle 18 bleibt, so daß im weiteren das Ritzel 16 sich wieder voll auf die Welle 18 aufschraubt und seine in Fig. 2 dargestellte Position einnimmt.

Das Umschalten des Motors 20 kann z.B. mittels eines Schalters geschehen, der durch die horizontale Verschiebung des Ritzels 16 auf der Welle 18 betätigt wird. Gleichzeitig können dabei auch noch andere mit dem Brennschneiden gleichzeitig ablaufende Vorgänge entsprechend den betrieblichen Anforderungen geschaltet werden.

So ist es möglich, etwa die beim Brennschneiden erforderliche Gaszufuhr abzuschalten oder eine möglicherweise stattfindende Pulverzufuhr zu stoppen. Dies würde es erleichtern, nach dem Aufstoßen des Brenners 10 auf das Werkstück 8, zunächst einmal die Art und Größe der möglichen Beschädigung des Brenners 10 samt seiner Aufhängekonstruktion 12 zu überprüfen, bevor mit dem Brennschneiden angefangen bzw. das Brennschneiden fortgeführt wird.

Außerdem ist es noch weiter möglich, nach erfolgter Umschaltung des Motors 20 durch zusätzliches Aktivieren eines Zeitrelais die gesamte Stromversorgung für die Brennschneidmaschine abzuschalten.

**Patentansprüche**

1. Schweiß- oder Schneidbrenner mit einer Halterung (12) für den Brenner, welche an einer Zahnstange (14) angeordnet und von einer Antriebswelle (18) vertikal verfahrbar ist und welche zum Verhindern des angetriebenen Aufstoßens des Brenners auf das Werkstück (8) eine Schwerkraftkopplung besitzt, die sich bei Auftreffen des Brenners auf das Werkstück selbsttätig löst, dadurch gekennzeichnet, daß die Antriebswelle (18) über ein Ritzel (16) mit der Zahnstange verbunden ist und das Ritzel und die Antriebswelle eine gemeinsame koaxiale Schraubverbindung (24, 26) besitzen, welche in einer relativen Drehrichtung zwischen Ritzel und Antriebswelle durch Begrenzen der axialen Relativverschiebung eine Antriebsverbindung und in der anderen relativen Drehrichtung das Lösen dieser Antriebsverbindung herbeiführt.

2. Brenner nach Anspruch 1, dadurch gekennzeichnet, daß das Ritzel (16) mittels einer Feder (34) gegen eine Schulter (36) der Welle (18) in Längsrichtung derselben andrückbar ist.

**Revendications**

1. Chalumeau de soudage ou de coupage comportant un support (12) pour le chalumeau qui est monté sur une crémaillère (14) et peut être déplacé verticalement par un arbre d'entraînement (18), et qui, pour éviter que le chalumeau entraîné ne rencontre la pièce à usiner (8), comporte un embrayage à gravité qui débraye automatiquement lorsque le chalumeau arrive sur la pièce, chalumeau caractérisé en ce que l'arbre d'entraînement (18) est relié à la crémaillère par un pignon (16) et le pignon ainsi que l'arbre d'entraînement ont une liaison à vis (24, 26) coaxiale commune qui, pour un premier sens de rotation relative entre le pignon et l'arbre d'entraînement établit une liaison d'entraînement en limitant la translation relative axiale et qui pour l'autre sens de rotation débraye cette liaison d'entraînement.

2. Chalumeau selon la revendication 1, caractérisé en ce que le pignon (16) est appliqué par un ressort (34) contre un épaulement (36) de l'arbre (18) dans la direction longitudinale.

**Claims**

1. Welding or cutting torch with a mounting (12) which is intended for the torch, is arranged on a rack (14), is movable vertically by means of a drive shaft (18) and has, to prevent the driven impact of the torch against the workpiece (8), a gravity coupling which is released automatically when the torch comes up against the workpiece characterized in that the drive shaft (18) is connected to the rack via a pinion (16), and the pinion and the drive shaft have a common coaxial screw connection (24, 26) which makes a drive connection between the pinion and drive shaft in one relative direction of rotation, by limiting the axial relative shift, and breaks this drive connection in the other relative direction of rotation.

2. Torch according to Claim 1, characterized in that the pinion (16) can be pressed against a shoulder (36) of the shaft (18) in the longitudinal direction of the latter by means of a spring (34).

FIG. 1

32 34
14 20
30 16
12
10
8

FIG. 3

32 34
14
30 16
20
18
12
10
8

FIG. 2

FIG. 4